# EUROPEAN PATENT SPECIFICATION

(11) **EP 3 672 789 B1**
(45) Date of publication and mention of the grant of the patent: **14.10.2026**
(21) Application number: 18772884.5
(22) Date of filing: 23.08.2018
(51) Int. Cl.: B29D 11/00, G01M 11/02, G01B 11/06, G01B 11/14

(54) **METHOD AND DEVICE FOR DETERMINING WHETHER OR NOT A SINGLE USE MOLD IS ACCEPTABLE**
VERFAHREN UND VORRICHTUNG ZUR BESTIMMUNG; OB EINE EINWEGGUSSFORM AKZEPTABEL IST ODER NICHT
PROCÉDÉ ET DISPOSITIF POUR DÉTERMINER SI UN MOULE À USAGE UNIQUE EST ACCEPTABLE OU NON

(30) Priority: 24.08.2017 US 201762549629 P
(43) Date of publication of application: 01.07.2020
(73) Proprietor: ALCON INC., 1701 Fribourg (CH)
(72) Inventor: TONN, Thomas, 63868 Grosswallstadt (DE)
(74) Representative: Bohest AG
(86) International application number: PCT/IB2018/056399
(87) International publication number: WO 2019/038716

(56) References cited:
- US-A1- 2005 264 756
- US-A1- 2005 264 756
- US-A1- 2006 176 491
- US-A1- 2006 176 491
- US-A1- 2008 007 694
- US-A1- 2008 007 694
- US-A1- 2009 262 333
- US-A1- 2009 262 333
- US-A1- 2014 072 665
- US-A1- 2014 072 665
- US-A1- 2014 078 513
- US-A1- 2014 078 513
- US-A1- 2016 047 712
- US-A1- 2016 047 712
- US-A1- 2016 061 689
- US-A1- 2016 061 689
- US-B1- 6 428 301
- US-B1- 6 428 301

## Description

This invention relates to a method and a device for determining whether or not a single use lens mold, in particular for forming soft contact lenses, in particular soft toric contact lenses, is acceptable. In particular, the present invention uses interferometry to measure the thickness profile of a molding cavity of the single use lens mold.

### BACKGROUND

Ophthalmic lenses may be created using a variety of methods, one of which includes molding using single-use lens molds. In this molding process, the lenses are manufactured between two mold halves without subsequent machining of the surfaces or edges. As such, the geometry of the lens is determined by the geometry of the lens mold having a first and a second optical lens molding surface forming a lens mold cavity in the assembled, closed mold. The process of the lens production generally involves dispensing a liquid crosslinkable and/or polymerizable material into a female mold half, mating a male mold half to the female mold half, heating and/or irradiating to crosslink and/or polymerize, separating the mold halves and removing the lens and packaging the lens.

Typical molds may be spherical or non-spherical, depending upon the type of lens to be created. Because most molds have one or more arcuate surfaces, linear coordinates may be unable to measure a curved surface accurately or may only be able to accurately measure portions of the mold geometry. Therefore, once a mold is designed and fabricated it must be measured to ensure that it meets the specifications. After validation of the mold design, the fabricated single use molds have to be checked at least on a random basis whether they meet the specifications.

US 2008/0007694 A1 discloses a method for determining whether or not a lens mold is acceptable in accordance with the preamble of claim 1.

### SUMMARY OF THE INVENTION

The present invention suggests a method and a device as it is specified by the features of the respective independent claim. Advantageous aspects of the method and the device according to the invention are the subject matter of the dependent claims.

The present invention includes, inter alia, evaluating the thickness profile of a molding cavity of a closed lens mold which has one or more boundaries that reflect light using an interferometer. An interferometer is a measurement instrument that utilizes optical interference to determine various characteristics of optical surfaces. Interferometers typically generate a light beam, such as that of a laser, and split this light beam using a beam splitter. The resulting two light beams include a sample light beam, in particular a thickness measurement beam, and a reference light beam. These light beams are passed through a lens mold and a reference optical system, respectively, to create interference fringes which may then be analyzed. For example, the interferometer may be a fiber-optic interferometer.

By positioning the lens mold such that the thickness measurement beam is incident upon the lens mold, measurements of the distance between the lens molding surfaces of the male and female mold halves (thickness of the molding cavity) of the closed lens mold are obtained from the interference fringes created by the interferometer. Said interference fringes are generated by light reflecting off of the boundaries between two different phases. In particular, the interference fringes are generated by the light reflection between a phase surrounding the lens mold and the outer surface of the female mold half, between the inner surface of the female mold half and the medium in the molding cavity, in particular air, lens forming material or cured lens forming material, the medium in the molding cavity and the inner surface of the male mold half, and the outer surface of the male mold half and said phase surrounding the lens mold. The inner surface of the respective mold half is the lens molding surface facing the molding cavity of the lens mold, whereas the outer surface of the lens mold is the surface not facing the molding cavity. The interference fringes generated by the boundaries between the inner surface of the female mold half and the medium in the molding cavity, the medium in the molding cavity and the inner surface of a male mold half are then analyzed.

The analysis of the interference fringes includes calculating the distance between the lens molding surfaces surrounding the molding cavity using optical path length and group index as known in the art. The measurement of the distance between the lens molding surfaces resulting by the reflections at their boundaries with the medium contained in the molding cavity allows for evaluation of the thickness profile of the molding cavity, in particular by converting optical path length to molding cavity thickness.

The evaluation of the thickness profile of the molding cavity allows to determine whether or not the lens mold is acceptable by comparing the measured thickness profile to an expected and therefore predetermined thickness profile. This predetermined thickness profile is a model which may be provided in the electronic evaluation unit for comparison to and/or correlation with the measured thickness profile. The degree of correlation may be expressed by a parameter of deviation between the measured thickness profile and the predetermined thickness profile, the parameter of deviation being an indication of the acceptability of the measured thickness profile when the parameter of deviation passes a predetermined threshold value.

As described above, the optical path length is measured. To convert optical path length to actual material thickness, the measured optical path length must be divided by the group index or group velocity of the material, in consideration of the shape of the lens molding surface which may be concave or convex, a calibration leading to an offset value for the calculation. The group index is a material property and is related to the refractive index, as known in the art. The difference in group index between materials allows for the interferometer to detect the reflection. In an embodiment in which a lens forming material is present in the molding cavity of the closed mold, the lens forming material would have a different group index than the polypropylene mold halves. Same applies for an empty closed mold in which a gas, in particular air, is present in the molding cavity of the empty closed mold, since the gas would have a different group index than the polypropylene mold halves.

The light used by the interferometer may be visible, UV, IR, or any other wavelength of radiation that will reflect off the surfaces of interest. Due to the small tolerance on the angle of reflectance, the lens molding surfaces are preferably substantially normal (about 5 degrees from perpendicular) relative to the thickness measurement beam, for example from a light emitting probe of a fiber-optic interferometer, to pick up the measurement signal from the light reflected. The probe may act as a lens focusing system that shapes the light from the fiber-optic interferometer into a useful form. Additionally, the optics of the interferometer probe will preferably determine the distance of the lens mold from the light-emitting aperture on the interferometer probe. Since in the instant invention points other than those located near the center are scanned, the lens mold or the interferometer probe is preferably moved in a way that keeps the orientation of the interferometer probe and the lens mold constant to within the tolerance of the instrument.

The method according to the invention allows for non-destructive determination whether the single-use lens mold conforms to the specification of the lens to be manufactured. This method may be used offline or inline for the evaluation of the lens mold. The method allows for the evaluation of the closed lens mold comprising air in its molding cavity before using the lens mold for the manufacture of a lens. In particular, since the manufacture of a lens takes long time from the dosing of the lens forming material into the molding cavity of the lens mold until the cured lens is formed, this method allows for simple and efficient determination whether a lot of lens molds conforms to the specification at a very early stage of the manufacturing process without having to evaluate sample contact lenses produced in the manufacturing process. The method additionally allows for a drastic shortening of the process development time, as the measurement may be performed without having to first produce sample lenses.

Lenses manufactured with such lens molds may be made from polymethyl methacrylate, polyvinyl alcohol, silicone hydrogel or other suitable polymers. The lens molds may be made from a polymer sufficiently transparent for allowing the thickness measurement beam to traverse the lens mold. For example, the lens mold may be made of a suitable polymer such as from a family of thermoplastics, such as polystyrene, polycarbonate, poly [4-methyl-pentene 1] (TPX), polyvinyl chloride (PVC), polyethylene, polypropylene, copolymers of styrene with acrylonitrile or butadiene, acrylates such as polymethyl methacrylate, polyacrylonitrile, polyamides, polyesters, etc. in particular polyethylene or polypropylene.

The method according to the invention is particularly advantageous when the single-use lens mold is an aspherical lens mold for manufacturing toric contact lenses comprising a ballast in form of an increased lens thickness or a slab-off. The method allows for evaluation of the geometry of the toric contact lens to be manufactured by evaluating whether the thickness profile of the molding cavity of the closed lens mold corresponds to the expected thickness profile of the toric contact lens to be manufactured, with the position and the thickness of the ballast underlying strict specifications. It has been shown that the medium in the molding cavity has only reduced influence on the molding cavity geometry, hence the measurement may be performed either with air in the molding cavity, or with an uncured lens forming material contained therein. The thickness profile of the molding cavity therefore correlates with the thickness profile of a toric contact lens produced by curing an uncured lens forming material in the molding cavity of such lens mold.

The geometry of the expected thickness profile of the molding cavity of such lens mold for a toric contact lens being known, in particular along the at least one measurement circle, the thickness profile of the molding cavity is approximated by at least a three-point measurement along the at least one measurement circle, and by correlating the measurement values (distances between the molding surfaces) with a model of the molding cavity geometry. Of course, the more measurement points, the better the approximation of the thickness profile, and the better the determination whether the thickness profile corresponds to the specifications. The evaluation of the thickness profile is enhanced as the measurement of the thickness profile is performed on the at least three positions arranged along the measurement circle which is concentric with an optical axis of the lens mold, the at least one measurement circle not coinciding with the optical axis.

**In** an embodiment, at least three interferometer probe heads may be provided to measure at least three specific points of interest along the at least one measurement circle. **In** this embodiment one interferometer probe of a multi-channel interferometer may be used for each point of interest. This embodiment is of particular advantage when the method is used inline.

Alternatively, measuring the thickness profile of the molding cavity may be performed by rotating the lens mold about the optical axis of the lens mold, the thickness measurement beam impinging on the lens mold along the at least one measurement circle during rotation of the lens mold. This allows for precise determination of the thickness profile of the molding cavity, as the lens mold may be rotated by an actuator about the optical axis of the lens mold allowing for recording a multiplicity of thickness measurements.

Tilting the lens mold about a tilting axis normal to the thickness measurement beam of the interferometer impinging on the lens mold may allow for simple recording of measurement data along measurement circles including the measurement of the apex-to-apex thickness, the distance between the molding surface at the apex of the male mold half and the molding surface at the apex of the female mold half.

When the thickness profile of the molding cavity is measured along at the at least one measurement circle concentric with the optical axis of the lens mold, the measurement may include the measurement of a thickness of the molding cavity between the apex of the first optical lens molding surface and the apex of the second optical lens molding surface measured along the optical axis of the lens mold (apex-to-apex thickness of the molding cavity).

Additionally, in the method according to the invention the radial adjustment gap between radially engaging walls of engagement portions of the closed lens mold is measured. The engagement portion of each mold half, generally the flange of each mold half, is radially surrounding the molding surfaces. The thickness measurement beam impinges on the radially engaging walls and measures the distance between these radially engaging walls for determining the radial adjustment gap. In particular, the radial adjustment gap may be measured at two or more positions along the radially engaging walls to determine a radial adjustment gap profile. Since the radially engaging walls provide for an interference fit, the radial adjustment gap generally will be substantially inexistent and therefore the existence of a radial adjustment gap (different from 0) at least around portions of the radially engaging walls is a sign for an inacceptable lens mold. Hence, the method according to the invention also allows for estimation of strains in the closed lens mold.

Further embodiments and advantages become apparent from the following description of detailed embodiments of the method and device according to the invention with the aid of the drawings.

### BRIEF DESCRIPTION OF THE DRAWINGS

FIG. 1 shows a set-up for measuring a thickness profile of the molding cavity of the lens mold with a multi-channel fiber-optic interferometer.
FIG. 2a is a representation of a thickness profile determined according to FIG. 1.
FIG. 2b is another representation of a thickness profile determined according to FIG. 1.
FIG. 3 shows a method for measuring a thickness profile of the molding cavity of the lens mold with a single-channel interferometer.
FIG. 4a shows a method for measuring a thickness of the radial adjustment gap of the lens mold with a single-channel interferometer.
FIG. 4b shows a method for measuring a thickness of the planar adjustment gap of the lens mold with a single-channel interferometer.
FIG. 5 shows a set-up for measuring a thickness profile of the molding cavity of the lens mold with a single-channel interferometer with a rotatable and tiltable lens mold holder.
FIG. 6 shows a method for measuring a thickness profile of the molding cavity of the lens mold with a single-channel interferometer interferometer using a rotatable and tiltable lens mold holder.
FIG. 7 is a representation of a thickness profile determined according to FIG. 3.
FIG. 8 shows a representation of a thickness profile of a defective lens mold determined according to FIG. 3.

### DETAILED DESCRIPTION

Reference will be made in detail to embodiments of the invention. It will be apparent to those skilled in the art that various modifications and variations can be made. For instance, features illustrated or described as part of one embodiment, can be used in another embodiment to yield a still further embodiment. Thus, the scope of protection is defined by the appended claims. In particular, the terms male mold and male mold half may be used interchangeably. The terms female mold and female mold half may also be used interchangeably. Additionally, the term "sample" refers to a mold sample. It is to be understood by one of ordinary skill in the art that the present discussion is a description of exemplary embodiments only, and is not intended as limiting the broader aspects of the present invention.

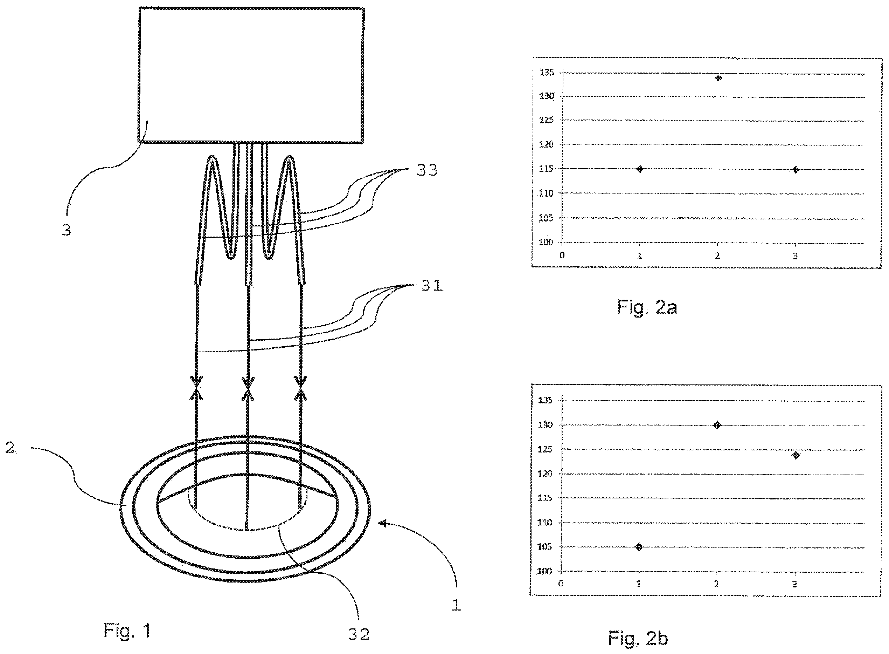

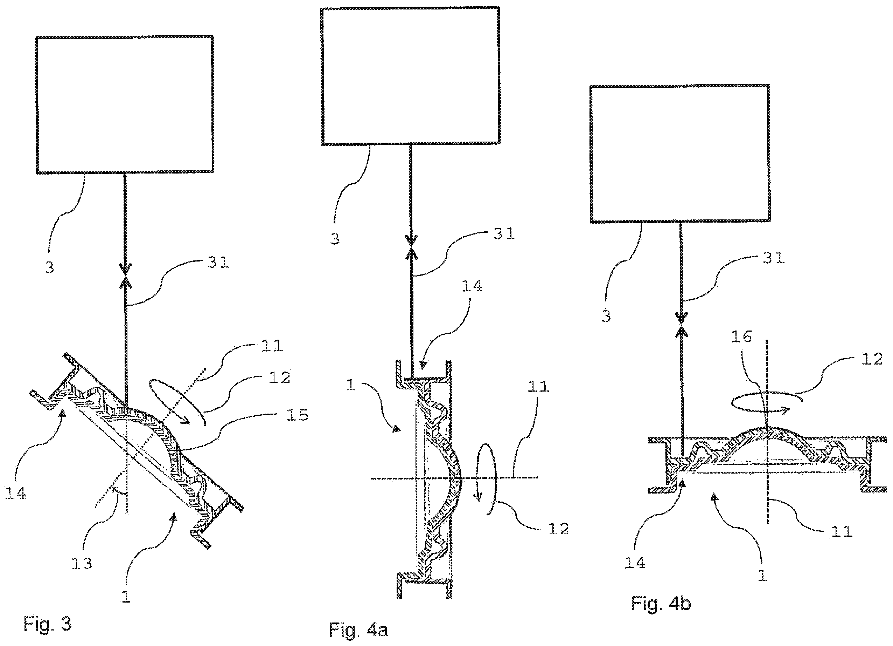

FIG. 1 shows a schematic set-up for measuring a thickness profile of the molding cavity 15 of the lens mold 1 with a three-channel fiber-optic interferometer 3 having three optical fibers 33. The three thickness measurement beams 31 emanating from each of the three optical fibers 33 are directed to three different positions on the lens mold 1. The thickness measurement positions on the lens mold 1 are located on a measurement circle 32 which is concentric with the optical axis of the lens mold 1. The lens mold 1 is arranged on a lens mold holder 2 for precise positioning of the lens mold 1. The three-channel interferometer 3 receives light reflected off the different boundaries of the lens mold which generates interference fringes. The interference fringes may be analyzed by fast Fourier transform, for example, for determination of the distance from the molding surface of the male mold to the molding surface of the female mold. At least three measurement positions allow for approximation of the thickness profile of the lens mold 1 based on the expected thickness profile of a molding cavity 15 (shown in FIG. 3) for a toric lens, for example. The measurement values are correlated to a model of the expected thickness profile which corresponds to the expected geometry of the molding cavity 15. The higher the number of measurement positions, the better the approximation may be correlated to the thickness profile of the molding cavity 15.

FIG. 2a and FIG. 2b represent the values for three measurement points of the three thickness measurement beams (numerals 1, 2 and 3 in the representations of the thickness profiles in FIGs. 2a, 2b) of the set-up shown in FIG. 1.

In the representation shown in FIG. 2a, the second measurement position is located at the maximum of the molding cavity thickness, in other words at a position where the prism ballast has the highest thickness on the measurement circle 32. The first and third measurement positions are located at equal distance on both sides of the second measurement position. Hence, the measured thickness values shown in FIG. 2a are symmetrical and allow an easy approximation of the thickness profile of the molding cavity.

A second representation of the measurement points is shown in FIG. 2b. In this representation, the lens mold is rotated by about 45°, the second measurement position not coinciding anymore with the location of the maximum of the molding cavity thickness. The measurement values for the first and third positions are not symmetrically located around the measurement value for the second position. However, knowing the expected geometry of the molding cavity, the thickness profile may be approximated using these three values with a precision acceptable for an inline thickness profile determination, for example.

FIG. 3 shows a measurement method for determining the thickness profile of the molding cavity 15 along a measurement circle by rotation 12 of the lens mold 1 about its optical axis 11 with the use of a single-channel interferometer 3. The thickness measurement beam 31 from the interferometer 3 impinges on the lens mold 1 at an angle 13 of 50° with respect to the optical axis 11 of the lens mold 1. Measuring the thickness profile is performed by rotating the lens mold 1 about the optical axis 11 of the lens mold 1. Due to the rotation 12 about the optical axis 11 of the lens mold 1, the thickness measurement beam 31 impinges on the lens mold 1 along the measurement circle during thickness measurement. In this embodiment, the thickness measurement beam 31 impinges onto the mold half in a direction normal to the tangential plane to the optical surface of the lens mold at the impingement point of the thickness measurement beam 31.

FIG. 4a and 4b show the measurement of adjustment gaps of engagement portions 14 of the lens mold 1, the engagement portion 14 of each mold half radially surrounding their molding surfaces. For this purpose, thickness measurement beam 31 impinges on the engagement portion 14 and measures the distance between two engaging walls of corresponding engagement portions 14 of the lens mold halves forming the closed lens mold 1. In FIG. 4a, a radial adjustment gap profile is determined around the circumference of the lens mold 1, whereas in FIG. 4b, a thickness profile of the planar adjustment gap of the lens mold is determined. The measurement of the radial adjustment gap is performed with the thickness measurement beam impinging on the radial edge of the lens mold, particularly normal to the optical axis of the lens mold. The measurement of the planar adjustment gap (Fig. 4b) occurs normal to the plane formed by the engagement portion between the flange of the upper mold half flange (female mold in the embodiment shown) and the lower mold half flange (male mold in the embodiment shown). In the embodiments shown, the planar adjustment gap is determined using a single-channel interferometer by rotation 12 of the lens mold 1 about its optical axis 11.

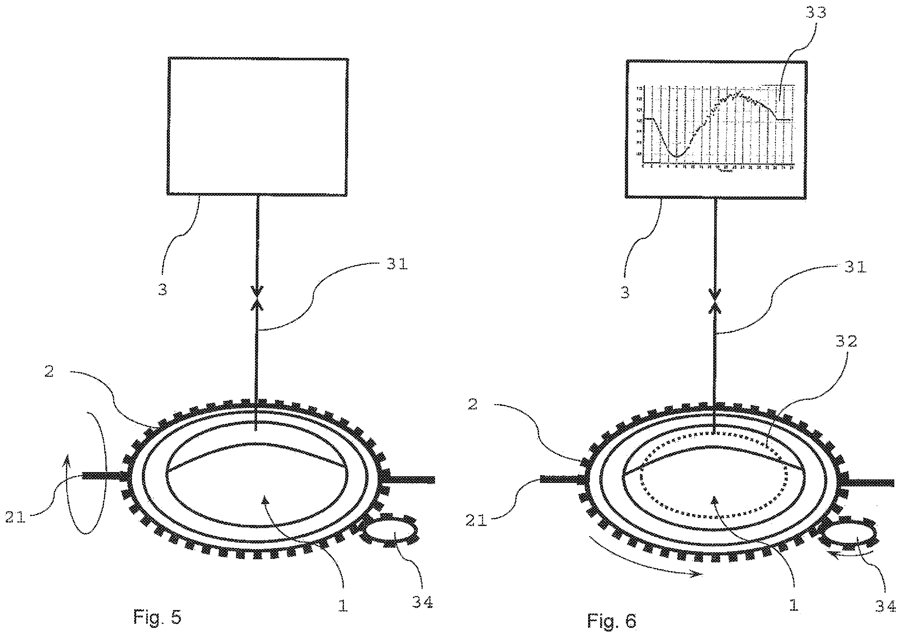

FIG. 5 shows another schematic set-up for measuring a thickness profile of the molding cavity of the lens mold 1, comprising a lens mold holder 2 rotatably holding a lens mold 1 and being configured to rotate the lens mold 1 about the optical axis 11 of the lens mold 1. The rotational axis coinciding with the optical axis is arranged substantially normal to a tangential plane to the lens molding surfaces at the apex 16 of the molding surfaces. In this case, substantially normal allows for a deviation of up to 5° from the normal to the tangential plane to the lens molding surfaces at the apex 16 of the molding surfaces. Preferably, the optical axis is arranged normal to a tangential plane to the lens molding surfaces at the apex 16 of the molding surfaces.

A tilted position of the lens mold 1 is obtained by a lens mold holder 2 configured to tilt the lens mold 1 about a tilting axis 21 that is normal to the thickness measurement beam 31 of the interferometer 3 impinging on the lens mold 1. The tilting direction is shown by the arrow in FIG. 5. The tiltable lens mold holder 2 allows for flexibly positioning the lens mold 1 for the thickness measurements by the interferometer 3, in particular for a measurement of the apex-to-apex molding cavity thickness or the adjustment gap thickness of engagement portions 14 of the lens mold 1 as discussed hereinbefore. The device further comprises an actuator 34 being configured to rotate the lens mold 1 relative to its optical axis 11.

As shown in FIG. 6, once the lens mold 1 is brought into position for a thickness profile measurement, the tiltable lens mold holder 2 is maintained in the tilted position and the lens mold 1 is rotated about its optical axis 11 for the measurement of the thickness profile along a measurement circle 32. During the measurement, the thickness measurement beam 31 impinges onto the lens mold 1 along the measurement circle 32. The rotation directions of the lens mold 1 and of the actuator 34 are shown by the arrows in FIG. 6.

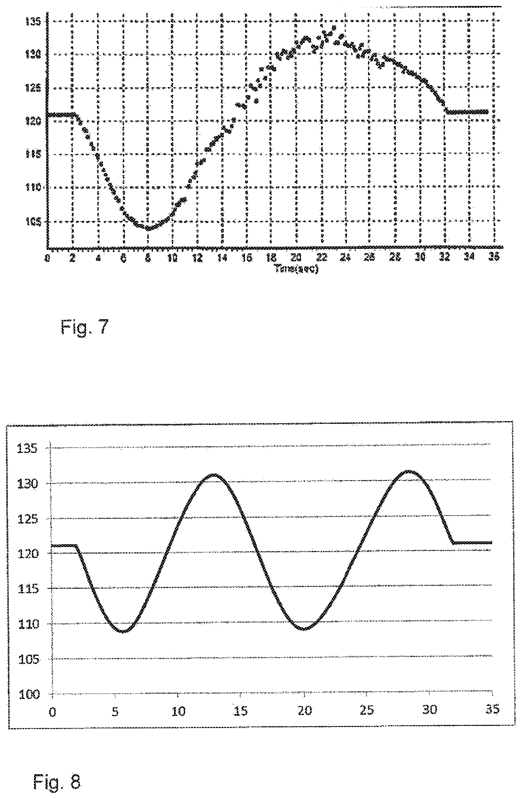

A result of a thickness profile of an acceptable molding cavity is shown in FIG. 7. The thickness profile represented has high correlation with the expected thickness profile. This representation is provided by an electronic evaluation unit 33 adapted for determining from the interference fringes generated by the interferometer 3 the thickness profile of the molding cavity 15 from the distance between the two molding surfaces of the molding cavity 15. The electronic evaluation unit 33 is further configured for comparing the measured thickness profile with a predetermined thickness profile to determine whether or not the lens mold 1 is acceptable. In particular, the thickness profile is correlated to a model of the expected thickness profile which corresponds to the expected geometry of the molding cavity 15. A threshold value for the correlation value of the measured thickness profile to the expected thickness profile may be used for the automated determination whether the lens mold 1 is acceptable or not.

Each dot in FIG. 7 represents a measurement value and the time scale is correlated to the rotation angle of the lens mold. The rotation starts at time 2 seconds (0° rotation) and a 360° rotation is accomplished at time 32 seconds. The higher the number of measurement points, the better the approximation of the thickness profile. In the development phase, it is advantageous to have a higher density of measurement points, whereas in an inline inspection, a lower rate of measurement points may be acceptable. In the chart represented in FIG. 7, a rate of 5 measurement points per second was chosen.

FIG. 8 shows a thickness profile of the molding cavity of a defective lens mold. Strains in the closed the lens mold occurring during assembly of the two lens mold halves are responsible for the inappropriate thickness profile having the shape of a saddle and the lens mold will have to be discarded. In the case shown in FIG. 8, the thickness profile cannot be correlated to a model of the expected thickness profile which corresponds to the expected geometry of the molding cavity, and the electronic evaluation unit will therefore not accept the lens mold. In case a correlation value of the measured thickness profile to the expected thickness profile model is determined, the correlation value will be below the threshold value and the automated evaluation will determine that the lens mold 1 is not acceptable.

## Claims

1. Method for determining whether or not a single use lens mold (1) is acceptable comprising:
providing a closed lens mold (1) comprising two lens mold halves, and having a first and a second optical lens molding surface forming a molding cavity (15) and defining a molding cavity thickness therebetween,
providing at least one interferometer (3), each having at least one thickness measurement beam (31),
providing a lens mold holder (2) for holding the lens mold (1),
positioning the lens mold (1) such that the thickness measurement beam (31) of the interferometer (3) impinges on the lens mold (1) for measurement of a distance between the first and second optical lens molding surfaces forming the molding cavity (15),
evaluating a thickness profile of the molding cavity (15) from the measurement of the distance between the first and second optical lens molding surfaces forming the molding cavity (15) using interference fringes generated by the interferometer (3), and
comparing the evaluated thickness profile with a predetermined thickness profile to determine whether or not the lens mold (1) is acceptable,
**characterized by**
the measurement of the distance between the first and second optical lens molding surfaces being performed on at least three positions of the molding cavity (15) of the lens mold (1) which are arranged along at least one measurement circle (32) extending concentrically about an optical axis (11) of the lens mold (1),
evaluating the thickness profile of the molding cavity (15) comprising approximating the thickness profile along the at least one measurement circle by correlating the distance measured on the at least three positions arranged along the at least one measurement circle with a model of the molding cavity geometry having an expected thickness profile along the at least one measurement circle, and
comparing the approximated thickness profile to the expected thickness profile,
wherein the two mold halves comprise engagement portions (14) radially surrounding the first and second optical lens molding surfaces and having radially engaging walls providing for an interference fit, and wherein the method further comprises
measuring a radial adjustment gap between the radially engaging walls of the engagement portions (14) by impingement of the thickness measurement beam (31) on the radially engaging walls, and
determining that the lens mold is inacceptable in case the radial adjustment gap is different from zero at least around portions of the radially engaging walls.

2. Method according to claim 1, wherein the step of measuring the distance between the first and second optical lens molding surfaces on at least three positions of the molding cavity (15) of the lens mold (1) is performed with the thickness measurement beam (31) impinging on the lens mold (1) at an angle of from 40° to 70°, particularly from 45° to 65°, very particularly from 50° to 60° with respect to the optical axis (11) of the lens mold (1).

3. Method according to claim 1 or claim 2, wherein
the step of providing a lens mold holder (2) comprises providing a lens mold holder (2) configured to hold the lens mold (1) in a manner such that the lens mold (1) is rotatable about an optical axis (11) of the lens mold (1), and
wherein the step of measuring the distance between the first and second optical lens molding surfaces is performed by rotating the lens mold (1) about the optical axis (11) of the lens mold for at least 60°, particularly at least 120°, very particularly at least 180°, with the thickness measurement beam (31) impinging on the lens mold (1) along the measurement circle (32) during rotation of the lens mold (1).

4. Method according to any one of claims 1 to 3, wherein the step of measuring the distance between the first and second optical lens molding surfaces is performed by impingement of the thickness measurement beam (31) onto the lens mold (1) within a range of up to 5° relative to the normal to the tangential plane to the first and second optical lens molding surfaces at the point of impingement of the thickness measurement beam (31).

5. Method according to any one of claims 1 to 4, wherein
the step of providing a lens mold holder (2) comprises providing a lens mold holder (2) configured to allow tilting of the lens mold (1) about a tilting axis normal to the thickness measurement beam (31) of the interferometer (3) impinging on the lens mold (1), and wherein
the step of positioning the lens mold (1) such that the thickness measurement beam of the interferometer impinges on the lens mold includes tilting the lens mold (1) about the tilting axis.

6. Method according to any one of claims 1 to 2, wherein
the step of providing at least one interferometer comprises providing a multi-channel interferometer (3) having at least three thickness measurement beams (31), and
wherein the step of measuring the distance between the first and second optical lens molding surfaces on the at least three positions of the molding cavity (15) is performed with the at least three thickness measurement beams (31).

7. Method according to any one of claims 1 to 6, wherein the thickness of the molding cavity (15) at the apex (16) of the molding surfaces is evaluated additionally to the evaluation of the thickness profile.

8. Method according to any one of claims 1 to 7, wherein uncured lens forming material is provided in the molding cavity (15) of the closed lens mold (1).

9. Method according to any one of claims 1 to 8, wherein air is provided in the molding cavity (15) of the closed lens mold (1).

10. Method according to any one of claims 1 to 8, wherein cured lens forming material is provided in the molding cavity (15) of the closed lens mold (1).

11. Device for determining whether or not a single use lens mold (1) is acceptable comprising:
a lens mold holder (2) for holding a closed lens mold (1) comprising two lens mold halves, and having a first and a second optical lens molding surface forming a molding cavity (15) and defining a molding cavity thickness therebetween,
at least one interferometer (3) configured to measure the distance between the first and second optical lens molding surfaces forming the molding cavity (15) of the closed lens mold (1) using a thickness measurement beam of the interferometer (3),
an electronic evaluation unit adapted for evaluating a thickness profile of the molding cavity (15) from the measurement of the distance between the first and second optical lens molding surfaces forming the molding cavity (15) using interference fringes generated by said interferometer (3), the electronic evaluation unit being further configured to compare the evaluated thickness profile with a predetermined thickness profile to determine whether or not the lens mold (1) is acceptable,
**characterized in that**
the device is adapted for measuring the distance between the first and second optical lens molding surfaces on at least three positions arranged along at least one measurement circle (32) extending concentrically about an optical axis (11) of the lens mold (1),
the evaluation unit is adapted for evaluating the thickness profile of the molding cavity (15) by approximating the thickness profile along the at least one measurement circle by correlating the distance measured on the at least three positions arranged long the at least one measurement circle with a model of the molding cavity geometry having an expected thickness profile along the at least one measurement circle,
the evaluation unit being further configured to compare the approximated thickness profile to the expected thickness profile,
wherein the two lens mold halves of the lens mold comprise engagement portions (14) radially surrounding the molding surfaces and having radially engaging walls providing for an interference fit,
and wherein the lens mold holder (2) is configured to hold the lens mold (1) to allow the at least one thickness measurement beam to impinge on the radially engaging walls for measuring a radial adjustment gap between the radially engaging walls of the engagement portions (14), in order to determine that the lens mold is inacceptable in case the radial adjustment gap is different from zero at least around portions of the radially engaging walls.

12. Device according to claim 11, wherein the lens mold holder (2) is configured to rotate the lens mold (1) about the optical axis (11) of the lens mold (1).

13. Device according to claim 11 or claim 12, wherein the lens mold holder (2) is further configured to tilt the lens mold (1) about a tilting axis (21) arranged normal to the optical axis (11) of the lens mold (3).

## Patentansprüche

1. Verfahren zum Bestimmen, ob eine Einweg-Linsenform (1) akzeptabel ist oder nicht, umfassend:
Bereitstellen einer geschlossenen Linsenform (1), die zwei Linsenformhälften umfasst und eine erste und eine zweite optische Linsenformfläche aufweist, die einen Formhohlraum (15) bilden und zwischen sich eine Formhohlraumdicke definieren,
Bereitstellen mindestens eines Interferometers (3), das jeweils mindestens einen Dickenmessstrahl (31) aufweist, Bereitstellen eines Linsenformhalters (2) zum Halten der Linsenform (1),
Positionieren der Linsenform (1) derart, dass der Dickenmessstrahl (31) des Interferometers (3) auf die Linsenform (1) trifft, um einen Abstand zwischen der ersten und der zweiten optischen Linsenformfläche, die den Formhohlraum (15) bilden, zu messen,
Auswerten eines Dickenprofils des Formhohlraums (15) anhand der Messung des Abstands zwischen der ersten und der zweiten optischen Linsenformfläche, die den Formhohlraum (15) bilden, unter Verwendung von durch das Interferometer (3) erzeugten Interferenzstreifen, und
Vergleichen des ausgewerteten Dickenprofils mit einem vorbestimmten Dickenprofil, um zu bestimmen, ob die Linsenform (1) akzeptabel ist oder nicht,
**dadurch gekennzeichnet, dass**
die Messung des Abstands zwischen der ersten und der zweiten optischen Linsenformfläche an mindestens drei Stellen des Formhohlraums (15) der Linsenform (1) durchgeführt wird, die entlang mindestens eines Messkreises (32) angeordnet sind, der sich konzentrisch um eine optische Achse (11) der Linsenform (1) erstreckt, das Auswerten des Dickenprofils des Formhohlraums (15) Approximieren des Dickenprofils entlang des mindestens einen Messkreises durch Korrelieren des an den mindestens drei entlang des mindestens einen Messkreises angeordneten Stellen gemessenen Abstands mit einem Modell der Formhohlraumgeometrie umfasst, das ein erwartetes Dickenprofil entlang des mindestens einen Messkreises aufweist, und
Vergleichen des approximierten Dickenprofils mit dem erwarteten Dickenprofil,
wobei die beiden Formhälften Eingriffsabschnitte (14) umfassen, die die erste und die zweite optische Linsenformfläche radial umgeben und radial ineinandergreifende Wände aufweisen, die für eine Presspassung sorgen, und wobei das Verfahren ferner umfasst:
Messen eines radialen Einstellspalts zwischen den radial ineinandergreifenden Wänden der Eingriffsabschnitte (14) durch Auftreffen des Dickenmessstrahls (31) auf die radial ineinandergreifenden Wände, und
Bestimmen, dass die Linsenform nicht akzeptabel ist, wenn der radiale Einstellspalt zumindest um Abschnitte der radial ineinandergreifenden Wände herum ungleich Null ist.

2. Verfahren nach Anspruch 1, wobei der Schritt des Messens des Abstands zwischen der ersten und der zweiten optischen Linsenformfläche an mindestens drei Stellen des Formhohlraums (15) der Linsenform (1) so durchgeführt wird, dass der Dickenmessstrahl (31) in einem Winkel von 40° bis 70°, insbesondere von 45° bis 65°, ganz besonders in einem Winkel von 50° bis 60° zur optischen Achse (11) der Linsenform (1), auf die Linsenform (1) trifft.

3. Verfahren nach Anspruch 1 oder Anspruch 2, wobei der Schritt des Bereitstellens eines Linsenformhalters (2) Bereitstellen eines Linsenformhalters (2) umfasst, der so ausgebildet ist, dass er die Linsenform (1) derart hält, dass die Linsenform (1) um eine optische Achse (11) der Linsenform (1) drehbar ist, und wobei der Schritt des Messens des Abstands zwischen der ersten und der zweiten optischen Linsenformfläche durchgeführt wird, indem die Linsenform (1) um die optische Achse (11) der Linsenform um mindestens 60°, insbesondere um mindestens 120°, ganz besonders um mindestens 180°, gedreht wird, wobei der Dickenmessstrahl (31) während der Drehung der Linsenform (1) entlang des Messkreises (32) auf die Linsenform (1) trifft.

4. Verfahren nach einem der Ansprüche 1 bis 3, wobei der Schritt des Messens des Abstands zwischen der ersten und der zweiten optischen Linsenformfläche durchgeführt wird, indem der Dickenmessstrahl (31) auf die Linsenform (1) in einem Bereich von bis zu 5° relativ zur Normalen zur Tangentialebene der ersten und der zweiten optischen Linsenformfläche am Auftreffpunkt des Dickenmessstrahls (31) auftrifft.

5. Verfahren nach einem der Ansprüche 1 bis 4, wobei
der Schritt des Bereitstellens eines Linsenformhalters (2) Bereitstellen eines Linsenformhalters (2) umfasst, der so ausgebildet ist, dass er ein Kippen der Linsenform (1) um eine Kippachse normal zum Dickenmessstrahl (31) des Interferometers (3), der auf die Linsenform (1) auftrifft, ermöglicht, und wobei
der Schritt des Positionierens der Linsenform (1) derart, dass der Dickenmessstrahl des Interferometers auf die Linsenform auftrifft, Kippen der Linsenform (1) um die Kippachse umfasst.

6. Verfahren nach einem der Ansprüche 1 bis 2, wobei
der Schritt des Bereitstellens mindestens eines Interferometers Bereitstellen eines Mehrkanal-Interferometers (3) mit mindestens drei Dickenmessstrahlen (31) umfasst, und
wobei der Schritt des Messens des Abstands zwischen der ersten und der zweiten optischen Linsenformfläche an den mindestens drei Stellen des Formhohlraums (15) mit den mindestens drei Dickenmessstrahlen (31) durchgeführt wird.

7. Verfahren nach einem der Ansprüche 1 bis 6, wobei zusätzlich zur Auswertung des Dickenprofils die Dicke des Formhohlraums (15) am Scheitelpunkt (16) der Formflächen ausgewertet wird.

8. Verfahren nach einem der Ansprüche 1 bis 7, wobei ungehärtetes Linsenbildungsmaterial in den Formhohlraum (15) der geschlossenen Linsenform (1) eingebracht wird.

9. Verfahren nach einem der Ansprüche 1 bis 8, wobei Luft in den Formhohlraum (15) der geschlossenen Linsenform (1) eingebracht wird.

10. Verfahren nach einem der Ansprüche 1 bis 8, wobei gehärtetes Linsenbildungsmaterial in den Formhohlraum (15) der geschlossenen Linsenform (1) eingebracht wird.

11. Vorrichtung zum Bestimmen, ob eine Einweg-Linsenform (1) akzeptabel ist oder nicht, umfassend:
einen Linsenformhalter (2) zum Halten einer geschlossenen Linsenform (1), die zwei Linsenformhälften umfasst und eine erste und eine zweite optische Linsenformfläche aufweist, die einen Formhohlraum (15) bilden und zwischen sich eine Formhohlraumdicke definieren,
mindestens ein Interferometer (3), das so ausgebildet ist, dass es den Abstand zwischen der ersten und der zweiten optischen Linsenformfläche, die den Formhohlraum (15) der geschlossenen Linsenform (1) bilden, unter Verwendung eines Dickenmessstrahls des Interferometers (3) misst,
eine elektronische Auswerteeinheit, die so ausgebildet ist, dass sie ein Dickenprofil des Formhohlraums (15) anhand der Messung des Abstands zwischen der ersten und der zweiten optischen Linsenformfläche, die den Formhohlraum (15) bilden, unter Verwendung von durch das Interferometer (3) erzeugten Interferenzstreifen auswertet, wobei die elektronische Auswerteeinheit ferner so ausgebildet ist, dass sie das ausgewertete Dickenprofil mit einem vorbestimmten Dickenprofil vergleicht, um zu bestimmen, ob die Linsenform (1) akzeptabel ist oder nicht,
**dadurch gekennzeichnet, dass**
die Vorrichtung dazu ausgelegt ist, den Abstand zwischen der ersten und der zweiten optischen Linsenformfläche an mindestens drei Stellen zu messen, die entlang mindestens eines Messkreises (32) angeordnet sind, der sich konzentrisch um eine optische Achse (11) der Linsenform (1) erstreckt,
die Auswerteeinheit dazu ausgelegt ist, das Dickenprofil des Formhohlraums (15) zu bewerten, indem das Dickenprofil entlang des mindestens einen Messkreises approximiert wird, indem der an den mindestens drei entlang des mindestens einen Messkreises angeordneten Stellen gemessene Abstand mit einem Modell der Formhohlraumgeometrie korreliert wird, das ein erwartetes Dickenprofil entlang des mindestens einen Messkreises aufweist,
wobei die Auswerteeinheit ferner so ausgebildet ist, dass sie das approximierte Dickenprofil mit dem erwarteten Dickenprofil vergleicht,
wobei die beiden Linsenformhälften der Linsenform Eingriffsabschnitte (14) umfassen, die die Formflächen radial umgeben und radial ineinandergreifende Wände aufweisen, die für eine Presspassung sorgen,
und wobei der Linsenformhalter (2) so ausgebildet ist, dass er die Linsenform (1) so hält, dass der mindestens eine Dickenmessstrahl auf die radial ineinandergreifenden Wände auftreffen kann, um einen radialen Einstellspalt zwischen den radial ineinandergreifenden Wänden der Eingriffsabschnitte (14) zu messen, um zu bestimmen, dass die Linsenform nicht akzeptabel ist, wenn der radiale Einstellspalt zumindest um Abschnitte der radial ineinandergreifenden Wände herum ungleich Null ist.

12. Vorrichtung nach Anspruch 11, wobei der Linsenformhalter (2) so ausgebildet ist, dass er die Linsenform (1) um die optische Achse (11) der Linsenform (1) dreht.

13. Vorrichtung nach Anspruch 11 oder Anspruch 12, wobei der Linsenformhalter (2) ferner so ausgebildet ist, dass er die Linsenform (1) um eine Kippachse (21) kippt, die normal zur optischen Achse (11) der Linsenform (3) angeordnet ist.

## Revendications

1. Procédé destiné à déterminer si un moule de lentille à usage unique (1) est acceptable ou non, comprenant :
l'obtention d'un moule de lentille fermé (1) comprenant deux moitiés de moule de lentille, et ayant une première et une deuxième surface de moulage de lentille optique formant une cavité de moulage (15) et définissant entre elles une épaisseur de cavité de moulage,
l'obtention d'au moins un interféromètre (3), chacun possédant au moins un faisceau de mesure d'épaisseur (31),
l'obtention d'un support de moule de lentille (2) destiné à maintenir le moule de lentille (1),
le positionnement du moule de lentille (1) de telle sorte que le faisceau de mesure d'épaisseur (31) de l'interféromètre (3) frappe le moule de lentille (1) pour la mesure d'une distance entre les première et deuxième surfaces de moulage de lentille optique formant la cavité de moulage (15),
l'évaluation d'un profil d'épaisseur de la cavité de moulage (15) à partir de la mesure de la distance entre les première et deuxième surfaces de moulage de lentille optique formant la cavité de moulage (15) au moyen de franges d'interférence générées par l'interféromètre (3), et
la comparaison du profil d'épaisseur évalué avec un profil d'épaisseur prédéterminé pour déterminer si le moule de lentille (1) est acceptable ou non,
**caractérisé en ce que**
la mesure de la distance entre les première et deuxième surfaces de moulage de lentille optique est effectuée sur au moins trois positions de la cavité de moulage (15) du moule de lentille (1) qui sont disposées le long d'au moins un cercle de mesure (32) s'étendant concentriquement autour d'un axe optique (11) du moule de lentille (1),
l'évaluation du profil d'épaisseur de la cavité de moulage (15) comprend l'approximation du profil d'épaisseur le long de l'au moins un cercle de mesure par corrélation de la distance mesurée sur les au moins trois positions disposées le long de l'au moins un cercle de mesure avec un modèle de la géométrie de la cavité de moulage ayant un profil d'épaisseur prévu le long de l'au moins un cercle de mesure, et
la comparaison du profil d'épaisseur approché avec le profil d'épaisseur prévu,
les deux moitiés de moule comprenant des parties d'enclenchement (14) entourant radialement les première et deuxième surfaces de moulage de lentille optique et ayant des parois s'enclenchant radialement assurant un ajustement serré, et le procédé comprenant en outre
la mesure d'un espace d'ajustement radial entre les parois s'enclenchant radialement des parties d'enclenchement (14) par impact du faisceau de mesure d'épaisseur (31) sur les parois s'enclenchant radialement, et
la détermination que le moule de lentille est inacceptable dans le cas où l'espace d'ajustement radial est différent de zéro au moins autour de parties des parois s'enclenchant radialement.

2. Procédé selon la revendication 1, dans lequel l'étape de mesure de la distance entre les première et deuxième surfaces de moulage de lentille optique sur au moins trois positions de la cavité de moulage (15) du moule de lentille (1) est effectuée avec le faisceau de mesure d'épaisseur (31) qui frappe le moule de lentille (1) selon un angle de 40° à 70°, en particulier de 45° à 65°, tout particulièrement de 50° à 60° par rapport à l'axe optique (11) du moule de lentille (1).

3. Procédé selon la revendication 1 ou la revendication 2, dans lequel
l'étape d'obtention d'un support de moule de lentille (2) comprend l'obtention d'un support de moule de lentille (2) conçu pour maintenir le moule de lentille (1) de manière à ce que le moule de lentille (1) soit rotatif autour d'un axe optique (11) du moule de lentille (1), et dans lequel l'étape de mesure de la distance entre les première et deuxième surfaces de moulage de lentille optique est effectuée par rotation du moule de lentille (1) autour de l'axe optique (11) du moule de lentille sur au moins 60°, en particulier au moins 120°, tout particulièrement au moins 180°, avec le faisceau de mesure d'épaisseur (31) qui frappe le moule de lentille (1) le long du cercle de mesure (32) pendant la rotation du moule de lentille (1).

4. Procédé selon l'une quelconque des revendications 1 à 3, dans lequel l'étape de mesure de la distance entre les première et deuxième surfaces de moulage de lentille optique est effectuée par impact du faisceau de mesure d'épaisseur (31) sur le moule de lentille (1) dans une plage allant jusqu'à 5° par rapport à la normale au plan tangentiel aux première et deuxième surfaces de moulage de lentille optique au point d'impact du faisceau de mesure d'épaisseur (31).

5. Procédé selon l'une quelconque des revendications 1 à 4, dans lequel
l'étape d'obtention d'un support de moule de lentille (2) comprend l'obtention d'un support de moule de lentille (2) conçu pour permettre l'inclinaison du moule de lentille (1) autour d'un axe d'inclinaison perpendiculaire au faisceau de mesure d'épaisseur (31) de l'interféromètre (3) qui frappe le moule de lentille (1), et dans lequel
l'étape de positionnement du moule de lentille (1) de telle sorte que le faisceau de mesure d'épaisseur de l'interféromètre frappe le moule de lentille comporte l'inclinaison du moule de lentille (1) autour de l'axe d'inclinaison.

6. Procédé selon l'une quelconque des revendications 1 à 2, dans lequel
l'étape d'obtention d'au moins un interféromètre comprend l'obtention d'un interféromètre multicanal (3) possédant au moins trois faisceaux de mesure d'épaisseur (31), et
dans lequel l'étape de mesure de la distance entre les première et deuxième surfaces de moulage de lentille optique sur les au moins trois positions de la cavité de moulage (15) est effectuée avec les au moins trois faisceaux de mesure d'épaisseur (31).

7. Procédé selon l'une quelconque des revendications 1 à 6, dans lequel l'épaisseur de la cavité de moulage (15) au sommet (16) des surfaces de moulage est évaluée en complément de l'évaluation du profil d'épaisseur.

8. Procédé selon l'une quelconque des revendications 1 à 7, dans lequel un matériau de formation de lentille non durci est présent dans la cavité de moulage (15) du moule de lentille fermé (1).

9. Procédé selon l'une quelconque des revendications 1 à 8, dans lequel de l'air est présent dans la cavité de moulage (15) du moule de lentille fermé (1).

10. Procédé selon l'une quelconque des revendications 1 à 8, dans lequel un matériau de formation de lentille durci est présent dans la cavité de moulage (15) du moule de lentille fermé (1).

11. Dispositif destiné à déterminer si un moule de lentille à usage unique (1) est acceptable ou non, comprenant :
un support de moule de lentille (2) destiné à maintenir un moule de lentille fermé (1) comprenant deux moitiés de moule de lentille, et ayant une première et une deuxième surface de moulage de lentille optique formant une cavité de moulage (15) et définissant entre elles une épaisseur de cavité de moulage,
au moins un interféromètre (3) conçu pour mesurer la distance entre les première et deuxième surfaces de moulage de lentille optique formant la cavité de moulage (15) du moule de lentille fermé (1) au moyen d'un faisceau de mesure d'épaisseur de l'interféromètre (3),
une unité électronique d'évaluation adaptée pour évaluer un profil d'épaisseur de la cavité de moulage (15) à partir de la mesure de la distance entre les première et deuxième surfaces de moulage de lentille optique formant la cavité de moulage (15) au moyen de franges d'interférence générées par ledit interféromètre (3), l'unité électronique d'évaluation étant en outre conçue pour comparer le profil d'épaisseur évalué avec un profil d'épaisseur prédéterminé afin de déterminer si le moule de lentille (1) est acceptable ou non,
**caractérisé en ce que**
le dispositif est adapté pour mesurer la distance entre les première et deuxième surfaces de moulage de lentille optique sur au moins trois positions disposées le long d'au moins un cercle de mesure (32) s'étendant concentriquement autour d'un axe optique (11) du moule de lentille (1),
l'unité d'évaluation est adaptée pour évaluer le profil d'épaisseur de la cavité de moulage (15) par approximation du profil d'épaisseur le long de l'au moins un cercle de mesure en corrélant la distance mesurée sur les au moins trois positions disposées le long de l'au moins un cercle de mesure avec un modèle de la géométrie de la cavité de moulage ayant un profil d'épaisseur prévu le long de l'au moins un cercle de mesure,
l'unité d'évaluation étant en outre conçue pour comparer le profil d'épaisseur approché avec le profil d'épaisseur prévu,
les deux moitiés de moule de lentille du moule de lentille comprenant des parties d'enclenchement (14) entourant radialement les surfaces de moulage et ayant des parois s'enclenchant radialement assurant un ajustement serré,
et le support de moule de lentille (2) étant conçu pour maintenir le moule de lentille (1) afin de permettre à l'au moins un faisceau de mesure d'épaisseur de frapper les parois s'enclenchant radialement en vue de mesurer un espace d'ajustement radial entre les parois s'enclenchant radialement des parties d'enclenchement (14), afin de déterminer que le moule de lentille est inacceptable dans le cas où l'espace d'ajustement radial est différent de zéro au moins autour de parties des parois s'enclenchant radialement.

12. Dispositif selon la revendication 11, dans lequel le support de moule de lentille (2) est conçu pour faire tourner le moule de lentille (1) autour de l'axe optique (11) du moule de lentille (1).

13. Dispositif selon la revendication 11 ou la revendication 12, dans lequel le support de moule de lentille (2) est en outre conçu pour incliner le moule de lentille (1) autour d'un axe d'inclinaison (21) disposé perpendiculairement à l'axe optique (11) du moule de lentille (3).
